(19) **Europäisches Patentamt / European Patent Office / Office européen des brevets**

(11) **EP 4 047 453 B1**

(12) **FASCICULE DE BREVET EUROPEEN**

(45) Date de publication et mention
de la délivrance du brevet:
**31.12.2025 Bulletin 2026/01**

(21) Numéro de dépôt: **22156929.6**

(22) Date de dépôt: **16.02.2022**

(51) Classification Internationale des Brevets (IPC):
**G06F 3/01** (2006.01)

(52) Classification Coopérative des Brevets (CPC):
**G06F 3/016**

(54) **INTERFACE HAPTIQUE FLEXIBLE**

**FLEXIBLE HAPTISCHE SCHNITTSTELLE**

**FLEXIBLE HAPTIC INTERFACE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2021 FR 2101596**

(43) Date de publication de la demande:
**24.08.2022 Bulletin 2022/34**

(73) Titulaire: **Commissariat à l'Energie Atomique et aux Energies Alternatives
75015 Paris (FR)**

(72) Inventeur: **CASSET, Fabrice
38054 Grenoble (FR)**

(74) Mandataire: **Ipsilon
12 Avenue d'Italie
75013 Paris (FR)**

(56) Documents cités:
**EP-A2- 2 381 340         WO-A2-2021/011232
US-A1- 2006 256 075**

- YU XINGE ET AL: "Skin-integrated wireless haptic interfaces for virtual and augmented reality", NATURE, MACMILLAN JOURNALS LTD., ETC, LONDON, vol. 575, no. 7783, 1 November 2019 (2019-11-01), pages 473 - 479, XP036928438, ISSN: 0028-0836, [retrieved on 20191120], DOI: 10.1038/S41586-019-1687-0
- CASSET F ET AL: "Low voltage actuated plate for haptic applications with PZT thin-film", 2013 TRANSDUCERS & EUROSENSORS XXVII: THE 17TH INTERNATIONAL CONFERENCE ON SOLID-STATE SENSORS, ACTUATORS AND MICROSYSTEMS (TRANSDUCERS & EUROSENSORS XXVII), IEEE, 16 June 2013 (2013-06-16), pages 2733 - 2736, XP032499441, DOI: 10.1109/TRANSDUCERS.2013.6627371

EP 4 047 453 B1

## Description

### Domain technique

La présente invention concerne les interfaces homme-machine, et plus particulièrement celles produisant des effect haptiques.

### Technique antérieure

Une interface haptique permet à l'utilisateur d'interagir avec l'environnement par le sens du toucher. L'effet haptique est aujourd'hui de plus en plus utilisé dans de nombreuses applications, par exemple sur un « Smartphone », lorsque celui-ci génère une légère vibration quand on appuie sur une touche affichée à l'écran pour simuler l'impression d'appuyer sur un bouton. Des applications haptiques existent aussi pour des dispositifs de réalité virtuelle ou augmentée, en particulier pour permettre une meilleure immersion dans les jeux vidéo. Les interfaces haptiques telles que les dalles tactiles, générant un effet haptique sur une surface tactile lorsqu'un utilisateur la contacte, peuvent notamment être intégrées à de nombreuses technologies comme des ordinateurs, tablettes et/ou smartphones.

Il est connu de générer des effets haptiques variés et relativement complexes sur une surface tactile rigide grâce à des transducteurs ultrasonores émettant des ondes ultrasonores qui se propagent sur la surface rigide.

Avec l'apparition sur le marché de produits commerciaux souples, tels que des téléphones portables pliables ou encore des téléviseurs enroulables, il est désirable de disposer d'interfaces haptiques flexibles pouvant s'intégrer à de tels produits.

L'usage d'un support souple simple portant des transducteurs ultrasonores est cependant limité car les ondes émises par les transducteurs sont en partie absorbées par le matériau souple ; l'effet haptique généré est alors difficilement perceptible par un utilisateur appliquant une pression avec son doigt ou sa main sur un tel support.

Il est par ailleurs connu d'utiliser un actionnement pneumatique pour générer des effets haptiques sur une structure souple. Le brevet US10240688B2 divulgue une interface haptique flexible comportant des actionneurs pneumatiques permettant de générer un effet de topologie.

L'article de Yu et al. « Skin-integrated wireless haptic interfaces for virtual and augmented reality » (Nature, 2019) divulgue une interface haptique flexible comportant des actionneurs magnétiques permettant de générer divers effets haptiques. Cependant, la résolution spatiale des effets haptiques obtenus avec une telle interface est relativement faible, et l'utilisation d'actionneurs magnétiques entraîne une consommation électrique élevée.

Enfin, des fluides non-newtoniens ont déjà été utilisés pour générer des effets haptiques simples tels que des effets de boutons et des effets de relief. L'article de Lochtefeld « Towards real organic user interfaces - using non-Newtonian fluids for self-actuated displays » (CHI13 workshop, 2013) décrit un dispositif haptique utilisant un fluide non-newtonien rhéoépaississant pris entre deux feuilles souples posées sur un réseau fixe de haut-parleurs. Une topologie perceptible au doigt est générée lorsqu'une onde sonore se propage dans le fluide et le durcit localement.

L'article de Poncet et. al. « Static and dynamic studies of electro-active polymer actuators and integration in a demonstrator » (Actuators Journal, 2017) décrit un dispositif comportant des actionneurs piézoélectriques à polymère électro-actif agencés de façon à obtenir des boutons à membrane souple vibrotactiles. Ces boutons sont portés par un support rigide.

### Exposé de l'invention

Il existe un besoin pour perfectionner encore les interfaces haptiques flexibles, notamment afin de disposer d'une interface tactile capable de générer des effets haptiques variés et présentant une bonne résolution spatiale.

### Résumé de l'invention

La portée de l'invention est définie par les revendications.

L'invention vise à répondre à ce besoin, et elle y parvient, selon un premier de ses aspects, grâce à une interface haptique flexible comportant une structure haptique définissant une surface tactile susceptible d'être contactée par un utilisateur, la structure comportant :

   o Une pluralité d'éléments tactiles individuels rigides, dits « pixels », portés par un support souple,
   o au contact de chaque élément, au moins un actionneur agencé pour transmettre une excitation mécanique à l'élément, conduisant à un effet perceptible tactilement par l'utilisateur.

Grâce à l'invention, la structure haptique présente une certaine souplesse, tout en permettant d'offrir des effets haptiques satisfaisants, avec une résolution spatiale et une fiabilité convenant à de nombreuses applications.

L'interface peut comporter tout circuit de commande configuré pour moduler les signaux envoyés aux actionneurs afin d'induire mécaniquement une vibration des éléments et générer une sensation haptique correspondante sur la surface tactile.

Eléments tactiles individuels

L'invention n'est pas limitée à des éléments tactiles individuels ayant une forme particulière. Toutefois, certaines formes peuvent faciliter la fabrication. Ainsi, au moins certains des éléments, mieux tous les éléments, peuvent avoir une forme générale polyédrique, de préférence parallélépipédique. Les éléments peuvent notamment se présenter sous la forme de lames rectangulaires.

Au moins certains des éléments, mieux tous les éléments, sont de préférence en un matériau relativement dur et répandu, tel que le verre, de préférence du verre borosilicate.

Au moins certains des éléments, mieux tous les éléments, ont de préférence une épaisseur sensiblement constante, de préférence comprise entre 50 microns et 5 mm, mieux entre 200 et 700 microns.

Tous les éléments peuvent être identiques. En variante, on peut combiner, au sein de la même interface, des éléments tactiles individuels de tailles différentes, en fonction par exemple de leur localisation relativement à la surface tactile, ou de l'application.

Support et intégration des éléments tactiles

Par « support », on désigne toute structure mono- ou multicouche qui assure le maintien des éléments tactiles individuels en position, et leur cohésion au sein de la structure haptique.

Le support est de préférence formé d'un ou plusieurs matériau(x) polymérique(s), ce qui peut faciliter la fabrication et l'obtention de la souplesse recherchée pour la structure haptique.

Les éléments sont avantageusement réalisés dans un matériau plus rigide que celui ou ceux du support. Le rapport du module de Young de chaque élément tactile à celui du support est par exemple supérieur ou égal à 8, mieux supérieur ou égal à 20, encore mieux supérieure ou égal à 50, plus préférentiellement compris entre 80 et 90, notamment égal à 85 environ.

Le choix de l'épaisseur du support peut s'effectuer en fonction de la souplesse de celui-ci, plus le support étant mou, plus son épaisseur pouvant être grande tout en permettant de conserver la souplesse recherchée.

Les éléments tactiles peuvent être intégrés au support de différentes façons, selon la structure du support.

Le support peut notamment comporter une couche porteuse et une couche de compensation de l'épaisseur des éléments. Cette couche de compensation s'étend entre les éléments, au-dessus de la couche porteuse.

La couche porteuse peut aussi avoir un rôle de couche de protection des éléments tactiles et/ou des actionneurs dont ceux-ci sont munis.

De préférence, la couche porteuse présente une épaisseur sensiblement constante, de préférence comprise entre 50 nm et 500 microns, mieux entre 25 et 80 microns, par exemple $50\mu m$.

La couche porteuse peut assurer à elle-seule la tenue des éléments tactiles au sein de la structure haptique. La couche de compensation d'épaisseur peut aussi jouer ce rôle, en association avec la couche porteuse.

Les éléments tactiles peuvent être tous situés d'un même côté de la couche porteuse, et la couche de compensation comporte des portions flexibles, encore appelées « ponts flexibles » ou « charnières souples », s'étendant entre les éléments.

La couche de compensation est de préférence d'épaisseur sensiblement constante, de préférence comprise entre 100 microns et 5 cm, de préférence entre $500\mu m$ et 5mm, par exemple 1mm.

Au moins une partie des éléments tactiles, de préférence tous les éléments tactiles, peuvent présenter une surface extérieure débouchant sur la surface tactile.

Cette surface extérieure des éléments tactiles peut venir à effleurement de la surface extérieure de la couche de compensation, la surface extérieure des éléments et celle de la couche de compensation définissant alors une surface sensiblement lisse qui peut servir de surface tactile pour l'interface.

L'utilisateur vient alors directement au contact des éléments tactiles lorsqu'il amène son doigt au contact de la surface tactile.

En variante, on peut recouvrir les éléments tactiles et la couche de compensation avec une couche de protection, qui peut être identique à la couche porteuse du support, ou non. L'épaisseur de cette couche de protection est relativement faible, de manière à ne pas affecter outre mesure le ressenti de l'effet tactile.

Le support peut comporter des logements dans lesquels s'étendent au moins partiellement les éléments tactiles, ces derniers étant par exemple recouverts continûment par une feuille souple définissant la surface tactile.

Dans un exemple de réalisation, le support comporte une couche de réception des éléments tactiles, la couche de réception formant des logements en forme de cuvette par exemple, et le support comportant également une couche de couverture des éléments, définie par exemple par la feuille souple précitée.

La couche de couverture permet notamment d'uniformiser extérieurement la surface tactile, et d'éviter des sensations tactiles parasites qui pourraient sinon survenir si l'utilisateur était au contact direct des éléments et/ou des régions avoisinantes, ces derniers pouvant former une surface hétérogène au toucher.

Agencement des éléments tactiles

Les éléments tactiles peuvent être répartis de différentes façons sur le support, en fonction notamment de l'application.

L'espacement entre deux éléments tactiles adjacents est de préférence compris entre 10 microns et 5 mm, mieux entre 1 et 2mm. Un faible espacement entre les éléments permet notamment d'accroître la résolution spatiale de l'effet haptique généré, si cela est souhaité.

Au moins une partie des éléments sont par exemple agencés en lignes et/ou en colonnes, notamment sur un même plan quand le support est mis à plat, de préférence selon un réseau régulier.

En variante, les éléments peuvent être disposés selon une répartition concentrique ou autre.

Actionneurs

Chaque élément tactile peut être muni de plusieurs actionneurs s'étendant sur une face de l'élément, par exemple la face située du côté du support et/ou sa face opposée.

Le ou les actionneurs associés à un élément tactile peuvent avoir chacun une forme allongée, de préférence selon la largeur de l'élément dans le cas où celui-ci présente une forme rectangulaire.

Les actionneurs peuvent être disposés de part et d'autre d'un plan médian de l'élément tactile, de préférence au niveau de nœuds ou de ventres de vibration.

Les actionneurs peuvent avoir chacun une forme générale polygonale, notamment rectangulaire ou carrée, ou avoir une forme circulaire.

Chaque actionneur peut être de type piézoélectrique, ferroélectrique, électromagnétique ou thermique. En particulier, chaque actionneur peut être piézoélectrique céramique.

Systèmes annexes

L'interface peut comporter un système de détection d'un contact de l'utilisateur sur la surface tactile, notamment une structure de détection capacitive, qui est le cas échéant intégrée à la structure haptique.

L'interface peut comporter un système permettant de superposer au moins partiellement à la surface tactile une image. L'interface peut ainsi comporter un écran, de préférence un écran intégrant la structure haptique.

L'interface peut comporter au moins un actuateur permettant de conformer sélectivement l'interface selon au moins deux formes distinctes. Cela peut être utile par exemple pour changer la forme de l'interface en fonction de la sensation tactile à reproduire, pour améliorer par exemple la qualité de la simulation.

L'invention a encore pour objet un article vestimentaire équipé d'une interface haptique selon l'invention, telle que définie plus haut.

L'invention a encore pour objet un appareil mobile équipé d'une interface selon l'invention, telle que définie plus haut.

Perception tactile

L'invention a encore pour objet un procédé pour générer au moins une perception tactile capable d'être ressentie par un utilisateur en contact avec une interface selon l'invention, comportant les étapes consistant à :

- détecter la position du contact de l'utilisateur sur la surface tactile flexible de l'interface grâce à un système de détection,
- moduler, grâce à un circuit de commande, les signaux envoyés aux actionneurs en fonction de la position détectée afin d'induire mécaniquement une vibration des éléments et générer un effet perceptible tactilement par l'utilisateur sur la surface tactile.

La vibration des éléments peut générer une variation de friction perceptible tactilement par un utilisateur déplaçant son doigt sur la surface tactile. Cet effet, encore appelé effet « squeeze-film », peut donner l'impression à l'utilisateur de toucher une surface présentant des reliefs, ou ayant différentes textures.

La vibration des éléments peut encore générer une impulsion perceptible tactilement par un utilisateur exerçant un contact statique sur la surface tactile. Cet effet permet par exemple de donner l'impression à l'utilisateur d'appuyer sur un bouton.

Réalisation d'un élément tactile individuel

L'invention a encore pour objet un procédé de fabrication d'un élément tactile individuel munis d'actionneurs de type piézoélectrique, utilisable dans une interface telle que définie plus haut, comportant les étapes consistant à :

- Déposer, de préférence par sérigraphie, au moins une première couche d'un matériau conducteur sur la face supérieure d'un support rigide, de préférence un support en verre,
- fixer des actionneurs piézoélectriques sur la première couche ainsi formée, de façon à établir une première connexion électrique avec les actionneurs,
- déposer une couche d'un isolant sur les couches précédemment déposées,
- amincir la couche isolante afin d'exposer la face supérieure de chaque actionneur piézoélectrique,
- déposer une couche d'un matériau conducteur sur les actionneurs ainsi exposés, de façon à établir une deuxième connexion électrique avec les actionneurs,
- découper le support de manière à obtenir des éléments tactiles munis chacun d'un ou plusieurs actionneurs piézoélectriques.

Ce procédé permet notamment de fabriquer simplement plusieurs éléments tactiles à partir d'un même support, par exemple une plaque de verre.

Les éléments tactiles ainsi obtenus peuvent ensuite être rapportés sur un support souple pour former une interface haptique.

L'invention a encore pour objet un procédé de fabrication d'une interface haptique telle que définie plus haut, comportant les étapes consistant à :

- Déposer une première couche en matériau souple, de préférence en polymère, sur un support de fabrication,
- fixer des éléments tactiles munis d'un ou plusieurs actionneurs sur la couche ainsi déposée, les actionneurs étant disposés sur la face extérieure des éléments,
- connecter électriquement chaque actionneur au circuit de commande, de préférence par masquage et pulvérisation d'un matériau conducteur,
- recouvrir les éléments tactiles et actionneurs par un matériau souple, de préférence un film polymère, et,
- séparer, notamment par pelage, l'ensemble ainsi réalisé du support de fabrication de manière à exposer la face inférieure de la première couche.

Cette première couche peut constituer la couche de couverture précitée, et le matériau souple déposé sur les éléments peut constituer la couche de réception précitée.

**Brève description des dessins**

L'invention pourra être mieux comprise à la lecture de la description détaillée qui va suivre, d'exemples de mise en œuvre non limitatifs de celle-ci, et à l'examen du dessin annexé, sur lequel :

[Fig 1] représente de manière partielle et schématique un exemple d'interface haptique flexible selon l'invention,

[Fig 2] représente de manière partielle et schématique un exemple de structure haptique comportant des éléments tactiles agencés en matrice,

[Fig 3] illustre de manière partielle et schématique un exemple d'intégration des éléments tactiles au sein de l'interface,

[Fig 4] est une vue analogue à la figure 3 d'un autre exemple d'intégration des éléments tactiles,

[Fig 5] représente de manière partielle et schématique un exemple d'interface haptique flexible équipée d'un système annexe,

[Fig 6] est une vue en perspective, partielle et schématique, d'un exemple d'élément tactile muni de deux actionneurs,

[Fig 7] illustre un mode de Lamb généré sur l'élément tactile de la figure 6 par les actionneurs à son contact,

[Fig 8] est un graphe illustrant les fréquences de résonance de l'élément de la figure 6 en fonction de son épaisseur,

[Fig 9] est une vue en perspective partielle et schématique d'une structure haptique montrant deux éléments tactiles,

[Fig 10] est une coupe dans l'épaisseur, schématique et partielle, de la structure haptique de la figure 9,

[Fig 11] est un graphe illustrant la mise en vibration de la structure haptique de la figure 9 lorsque le support est en polyimide (PI),

[Fig 12a] illustre de manière partielle et schématique la mise en vibration de la structure haptique de la figure 9 lorsque le support est en polyéthylène naphthalate (PEN),

[Fig 12b] est un graphe représentant l'amplitude de déformation verticale d'un élément tactile selon la coupe XII de la figure 12a,

[Fig 13a] représente de manière partielle et schématique une structure haptique comportant une matrice d'éléments tactiles,

[Fig 13b] représente de manière partielle et schématique la possibilité de mettre en vibration seulement une partie des éléments tactiles de la structure haptique de la figure 13a,

[Fig 14] est un schéma en blocs illustrant un exemple de fonctionnement de l'interface haptique selon l'invention,

[Fig 15a] illustre de manière partielle et schématique la possibilité de générer un effet tactile de bouton à partir d'une interface selon l'invention,

[Fig 15b] illustre de manière partielle et schématique la possibilité de générer un effet tactile de relief à partir d'une interface selon l'invention,

[Fig 15c] illustre de manière partielle et schématique la possibilité de générer un effet tactile de texture à partir d'une interface selon l'invention,

[Fig 16], [Fig 17] et [Fig 18] illustrent de manière partielle et schématique des étapes successives d'un exemple de procédé de fabrication d'éléments tactiles avec leurs actionneurs,

[Fig 19], [Fig 20], [Fig 21] et [Fig 22] illustrent de manière partielle et schématique des étapes successives d'un exemple de procédé de fabrication d'une structure haptique,

[Fig 23a] représente un exemple d'article vestimentaire équipé d'une interface haptique flexible selon l'invention,

[Fig 23b] illustre un exemple d'appareil mobile équipé d'une interface haptique flexible selon l'invention, et

[Fig 24] illustre la possibilité de modifier la forme de l'interface à l'aide d'actuateurs.

**Description détaillée**

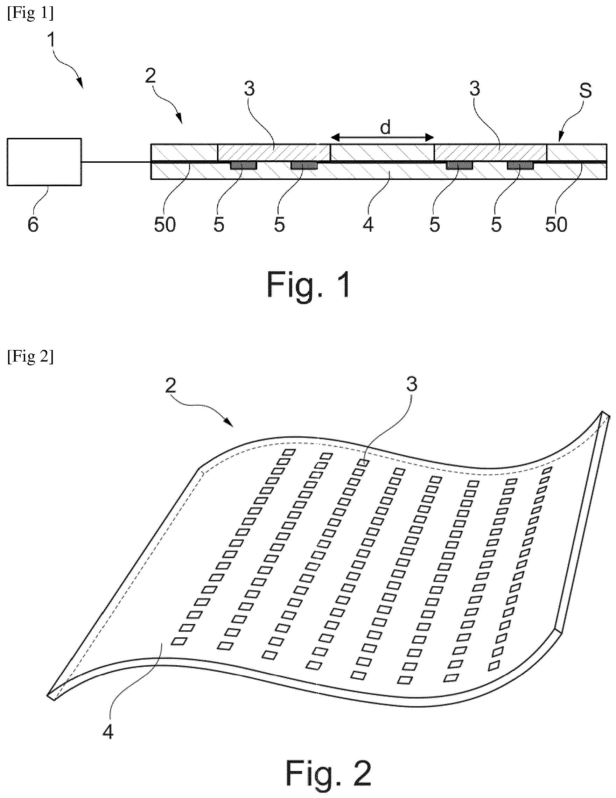

On a illustré à la figure 1 un exemple d'interface haptique flexible 1 selon l'invention. L'interface 1 comporte une structure haptique 2 définissant une surface tactile S. La structure haptique 2 comporte des éléments tactiles individuels 3 portés par un support souple 4. Les éléments tactiles individuels 3. encore appelés « pixels » par analogie avec les éléments optiquement actifs d'un écran, sont rigides et disposés sur le support 4 de manière à ce que la structure haptique 2 conserve une flexibilité d'ensemble selon au moins une direction, et mieux dans toutes les directions.

Les éléments tactiles 3 sont munis d'un ou plusieurs actionneurs 5, de préférence des actionneurs piézoélectriques, ces derniers étant reliés à un circuit de commande 6 grâce à des connexions électriques 50. Le circuit de commande 6 est configuré pour moduler les signaux envoyés aux actionneurs 5 afin d'induire mécaniquement des vibrations à ceux-ci et générer une sensation haptique sur la surface tactile S.

La structure haptique 2 peut être de toute forme, et de taille variée. Ses dimensions sont par exemple, en fonction de l'application, de l'ordre du cm, du dm ou du mètre.

Les éléments tactiles 3 peuvent présenter une forme variée, par exemple rectangulaire, carrée, circulaire ou autre. Leur plus grande dimension est par exemple comprise entre quelques centaines de microns à quelques cm de côté, de préférence de 2mm à 1 cm de côté.

Les éléments tactiles 3 sont par exemple en verre, notamment en verre de borosilicate, ou en silicium.

Les éléments tactiles 3 peuvent être répartis sur le support 4 selon des configurations diverses.

Par exemple, on a illustré à la figure 2 des éléments tactiles 3 identiques répartis en lignes et colonnes sur le support 4, selon un réseau régulier.

Dans d'autres modes de réalisation (non illustrés), l'interface 1 comporte des éléments tactiles de tailles et/ou de formes différentes, ou encore des éléments tactiles 3 disposés selon une répartition concentrique ou en quinconce.

On peut notamment jouer sur la taille des éléments tactiles afin de générer des effets haptiques simulant tactilement des motifs plus ou moins grands.

On peut aussi jouer sur l'espacement des éléments tactiles afin de générer des effets haptiques de résolution spatiale plus ou moins élevée. La distance d entre deux éléments tactiles est de préférence comprise entre quelques dizaines de microns et quelques mm, en particulier entre 1 et 2 mm.

Le support 4 assure le maintien des éléments tactiles 3 et participe à la cohésion de la structure haptique 2.

Le support 4 peut être monocouche ou multicouche. Il est de préférence en polymère, par exemple en polyéthylène naphthalate (PEN), polyimide (PI) ou encore en polycarbonate (PC). Il peut en outre comporter une ou plusieurs couches minces d'oxydes métalliques, de silicium ou d'autres métaux. L'épaisseur du support est adaptée en fonction de la nature du matériau, de façon à conserver la souplesse souhaitée.

L'intégration d'un élément tactile 3 au sein de la structure 2 peut se faire de plusieurs façons.

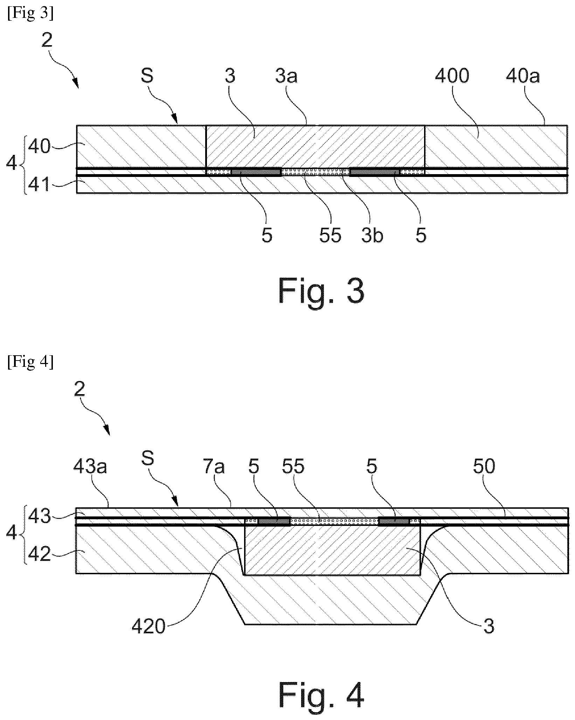

Dans l'exemple illustré à la figure 3, le support comporte un film porteur 41, qui peut servir de couche de protection, et une couche 40 de compensation de l'épaisseur des éléments 3.

Les éléments 3 sont portés par le film 41 et encastrés sur toute leur épaisseur dans la couche de compensation 40, qui définit des portions souples 400 entre les éléments, encore appelés « charnières ».

Les éléments tactiles 3 présentent une surface extérieure 3a débouchant sur la surface tactile S. Comme illustré, la couche de compensation 40 peut présenter une surface extérieure 40a venant à affleurement avec la surface 3a des éléments tactiles, pour former avec ceux-ci une surface lisse, qui est sensiblement plane lorsque la structure haptique 2 est mise à plat. La couche de compensation 40 peut présenter sensiblement la même épaisseur que les éléments tactiles 3.

L'utilisateur peut venir toucher directement la surface 3a des éléments tactiles 3 de l'interface lorsqu'il amène son doigt au contact de la surface tactile S.

En variante, il est possible de recouvrir les éléments tactiles 3 et la couche de compensation 40 avec une couche mince de protection (non représentée). Cela permet d'uniformiser la surface tactile, et d'éviter que l'utilisateur ne ressente un effet de texture non souhaité, dû à la différence entre le matériau des éléments et celui de la couche de compensation 40.

Dans l'exemple illustré à la figure 3, les actionneurs 5 se situent de préférence sur la face 3b des éléments tactiles 3 située du côté du film porteur 41, comme illustré. Les éléments tactiles 3 munis des actionneurs 5 sont par exemple fixés au support 4 grâce à une colle isolante 55.

Dans la variante illustrée à la figure 4, le support 4 comporte une couche 42 de réception des éléments 3 et une couche de couverture 43.

La couche de réception 42 forme des logements 420, en forme de cuvettes, venant accueillir chacun un élément tactile 3. La couche de couverture 43, par exemple une feuille souple de polymère, recouvre continument la couche de réception 42 et les éléments tactiles 3, fermant ainsi supérieurement les logements 420.

La couche de couverture 43 sert par exemple également de feuille protectrice des éléments tactiles 3.

Dans l'exemple considéré, la face libre 43a de la couche de couverture 43 définit la surface tactile S. La couche de couverture 43 est suffisamment fine pour propager l'effet vibratoire des éléments tactiles 3 à la surface tactile S. La couche de couverture 43 présente par exemple une épaisseur comprise entre quelques microns et quelques dizaines de microns.

Dans cette variante, les actionneurs 5 peuvent se situer indifféremment sur la face inférieure de l'élément 3, c'est-à-dire entre l'élément tactile 3 et le fond du logement 420 de la couche de réception 42, et/ou la face supérieure de l'élément tactile 3, c'est-dire entre l'élément tactile 3 et la couche de couverture 43. Lorsque des actionneurs 5 sont présents sur les faces opposées d'un élément 3, leur excitation est de préférence contrôlée de manière à bénéficier d'interférences vibratoires constructives entre eux.

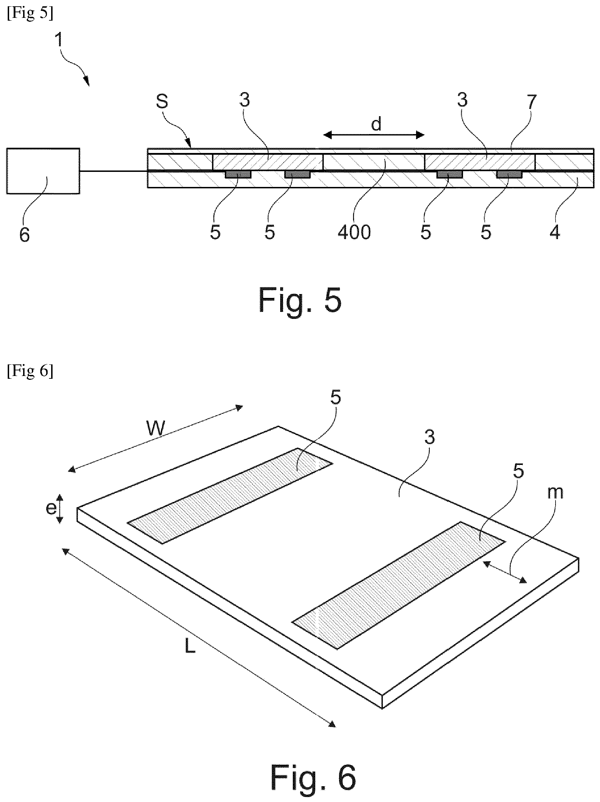

Dans l'exemple illustré à la figure 5, l'interface comporte un système de détection 7, par exemple un système capacitif connu de l'état de l'art, permettant la détection d'au moins un point de contact du doigt de l'utilisateur avec la surface S.

Le système de détection a été représenté à la figure 5 de manière schématique sous la forme d'un organe recouvrant les éléments tactiles 3 et le support 4, mais il peut faire partie du support 4 ou être intégré aux éléments tactiles.

L'interface 1 peut en outre comporter un ou plusieurs dispositifs annexes permettant d'améliorer l'expérience utilisateur, notamment d'en faire une expérience multisensorielle.

L'interface 1 peut ainsi comporter un écran souple (non représenté) qui permet de superposer une image à la surface tactile S et de par exemple donner l'impression à l'utilisateur de toucher virtuellement ce qu'il observe sur l'écran. L'interface 1 peut encore comporter un ou plusieurs haut-parleurs (non représentés) pour adjoindre un effet sonore.

Les actionneurs 5 peuvent être de tailles et de formes variées. Le nombre, le positionnement et le dimensionnement des actionneurs 5 sur un élément tactile 3 dépend de l'effet recherché.

On a illustré à la figure 6 un exemple d'élément tactile 3, sous forme de lame rectangulaire de largeur W d'environ 1cm et de longueur L d'environ 1,5cm. L'épaisseur e de l'élément 3 dans l'exemple considéré est de 500 microns.

L'élément 3 porte deux actionneurs 5 en forme de bande, chacun d'une largeur de l'ordre de 2000 microns par exemple, disposés chacun par exemple à une distance m de 2250 microns d'un bord latéral de l'élément.

Les actionneurs 5 sont par exemple d'épaisseur 2 microns, ayant par exemple une couche active à base de nitrure d'aluminium (AIN), titano-zirconate de plomb (PZT), ou tout autre matériau piézoélectrique ou ferroélectrique adapté.

La taille et la position des deux actionneurs 5 sont par exemple choisies de telle sorte à générer un mode oscillatoire de Lamb dans l'élément tactile, par exemple à une fréquence de l'ordre de 61 kHz, selon la méthodologie décrite dans l'article de Casset, F., et al. « Low voltage actuated plate for haptic applications with PZT thin-film » (Proceedings of Transducers, 2013).

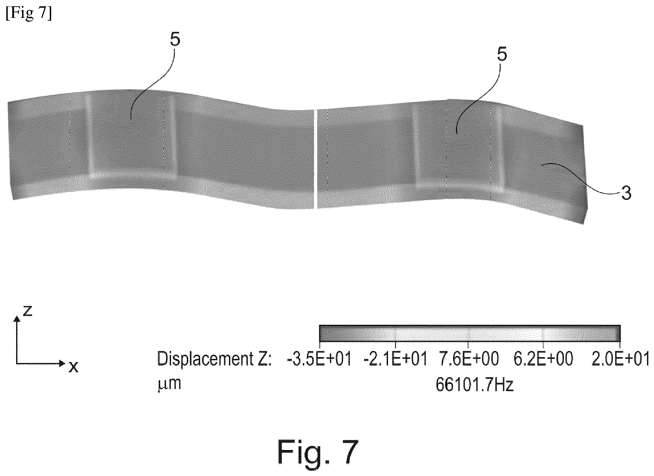

Comme illustré à la figure 7, les actionneurs 5 peuvent être situés au niveau des ventres du mode de vibration qu'ils génèrent. Mais d'autres configurations d'actionnement, par exemple comportant des actionneurs positionnés aux nœuds de vibration, sont possibles. Le mode de la figure 7 permet par exemple de générer une variation de friction sur l'élément tactile 3 perceptible tactilement par un utilisateur déplaçant son doigt sur la surface tactile.

Il est possible d'obtenir un effet haptique semblable à celui qui vient d'être décrit avec un élément tactile d'épaisseur différente.

En particulier, plusieurs modes de vibrations peuvent être générés à des fréquences qui dépendent de l'épaisseur de l'élément tactile 3. On peut générer dans l'élément tactile 3 un mode de Lamb, comme décrit précédemment, ou le premier mode de vibration selon la longueur L de l'élément, ou encore le premier mode de vibration selon la largeur W de l'élément.

Les différents modes de vibration pourront être obtenus en adaptant les actionneurs piézoélectriques suivant la méthode décrite dans l'article de Poncet et. al, « Design and realization of electroactive polymer actuators for transparent and flexible haptic feedback interfaces » (EuroSime, 2016).

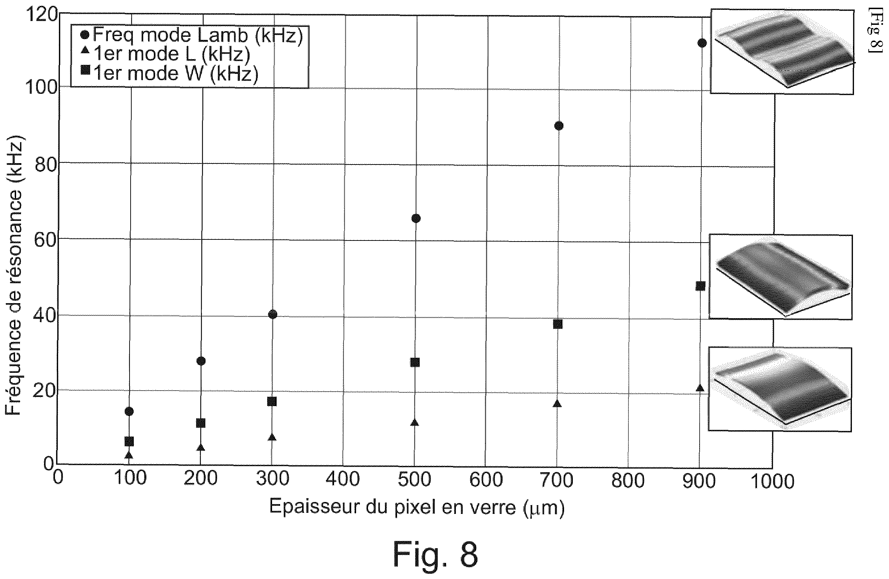

Le graphe de la figure 8 représente des exemples de fréquences de résonance correspondant aux trois modes de vibration précités, en fonction de l'épaisseur de l'élément pour un élément tactile de dimensions planaires $1 \times 1,5$ cm$^2$ comportant deux actionneurs en bande, tel que représenté à la figure 6.

On observe sur cette figure que si l'on souhaite utiliser le mode de Lamb (repéré par des ronds sur le graphe) pour générer l'effet haptique recherché, on choisira avantageusement une épaisseur de l'élément tactile comprise entre 200 et 700 microns, afin de rester dans des fréquences inaudibles par l'oreille humaine, c'est-à-dire supérieures à 20 kHz environ, et dans des fréquences inférieures à 100 kHz, de façon à maintenir une électronique de pilotage relativement simple.

De même, si l'on souhaite exploiter le premier mode de vibration selon la longueur L de l'élément (repéré par des triangles sur le graphe), on choisira une épaisseur de l'élément tactile supérieure à 900 microns.

Enfin, si l'on souhaite exploiter le premier mode de vibration selon la largeur W de l'élément (repéré par des carrés sur le graphe), on choisira une épaisseur de l'élément tactile entre 500 et 900 microns.

L'épaisseur de l'élément 3 est de plus contrainte par la rigidité recherchée pour percevoir l'effet tactile. En effet, une faible rigidité de l'élément tactile 3, induite, entre autres, par une faible épaisseur, peut diminuer la force exercée par l'élément tactile 3 sur l'utilisateur et donc l'effet ressenti. Une épaisseur plus importante de l'élément tactile 3 diminue par contre l'amplitude de vibration de l'élément, et peut donc atténuer l'effet haptique ressenti.

Une épaisseur comprise entre 50 microns et quelques mm, de préférence comprise entre 200 et 700 microns, peut constituer un bon compromis.

Dans une variante, les actionneurs 5 sont répartis sur l'élément tactile 3 selon une disposition matricielle. Dans un exemple, on répartit de cette façon sur l'élément 3 des actionneurs 5 de forme carrée de $5 \times 5$ mm$^2$ environ, espacés régulièrement de 2mm. Dans un autre exemple, on munit l'élément tactile 3 d'un unique actionneur 6, par exemple placé au centre de l'une de ses faces principales.

La rigidité du support 4 portant les éléments tactiles 3, par rapport à celle des éléments tactiles 3, a aussi un impact sur la qualité de l'effet haptique généré.

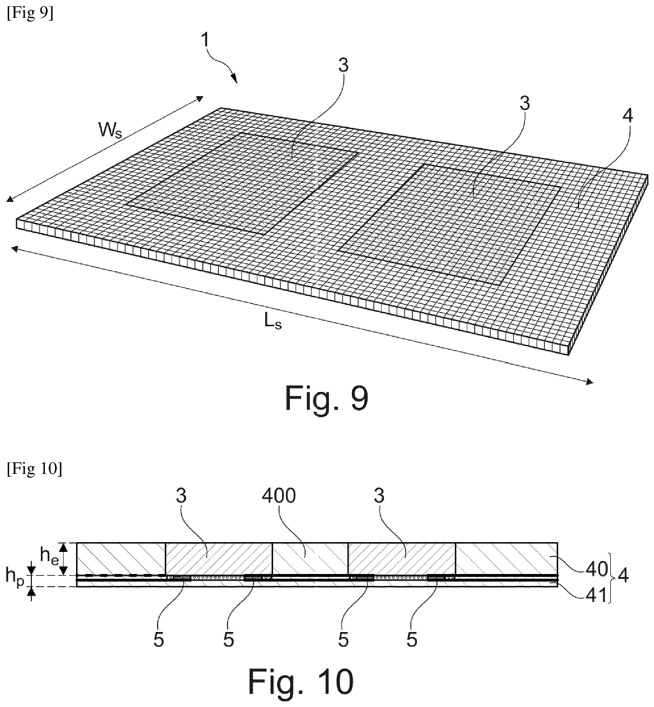

On décrit ci-dessous des résultats de simulation des vibrations d'une structure haptique 2, représentée à la figure 9, comportant un support 4 portant deux éléments tactiles 3 similaires à celui de la figure 6. Ces résultats sont obtenus avec le logiciel commercial COVENTOR, mais tout autre logiciel, notamment permettant une simulation par éléments finis, est utilisable.

Dans l'exemple considéré et comme représenté à la figure 10, les éléments tactiles 3 sont encastrés dans le support 4 et présentent une surface extérieure 3a débouchant sur la surface tactile S. La structure du support 4 est telle que décrite à la figure 3.

Les éléments tactiles 3 sont par exemple des lamelles en verre de borosilicate d'épaisseur 500 microns environ. Leur module de Young est de l'ordre de 65 à 70 GPa.

Le support présente une longueur $L_S$ de 3.5 cm, une largeur Ws de 2.5 cm et une épaisseur totale $h_E+h_P$ égale à 525 microns, l'épaisseur $h_E$ de la couche de compensation 40 étant de 500 microns, et l'épaisseur $h_P$ du film porteur 41 étant de 25 microns.

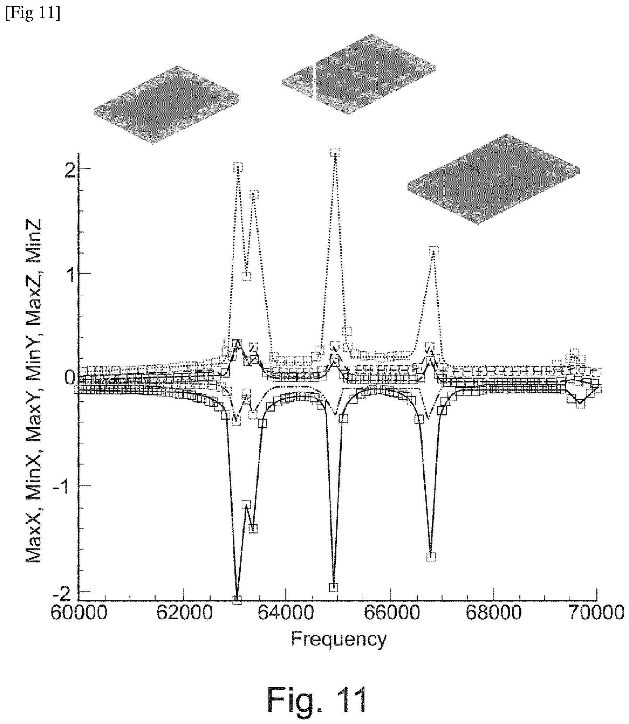

On a illustré à la figure 11 l'amplitude de vibration simulée pour une telle structure haptique dans les directions X, Y et Z, pour une fréquence comprise entre 60 et 70 kHz, lorsque le support 4 qui sert d'exemple comparatif est en PI, matériau qui présente un module de Young de l'ordre de 7.5 GPa. Le mode de vibration recherché n'est pas obtenu dans ces conditions, et aucun effet haptique intéressant ne peut être généré. Le support 4 en PI étant trop rigide, il applique des conditions aux limites mécaniques sur le pourtour des éléments tactiles et restreint leur vibration.

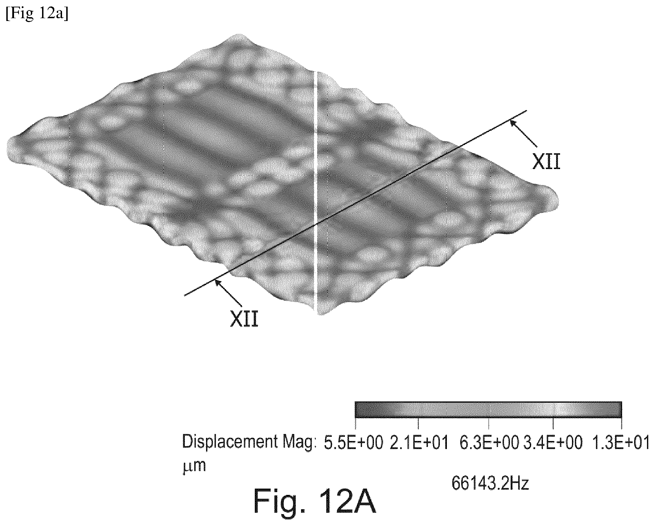

A l'inverse, lorsque le support 4 est en PEN, matériau dont le module de Young est de l'ordre de 0.75 GPa, il est possible de générer un mode de Lamb propre dans la structure haptique 2, comme représenté à la figure 12a.

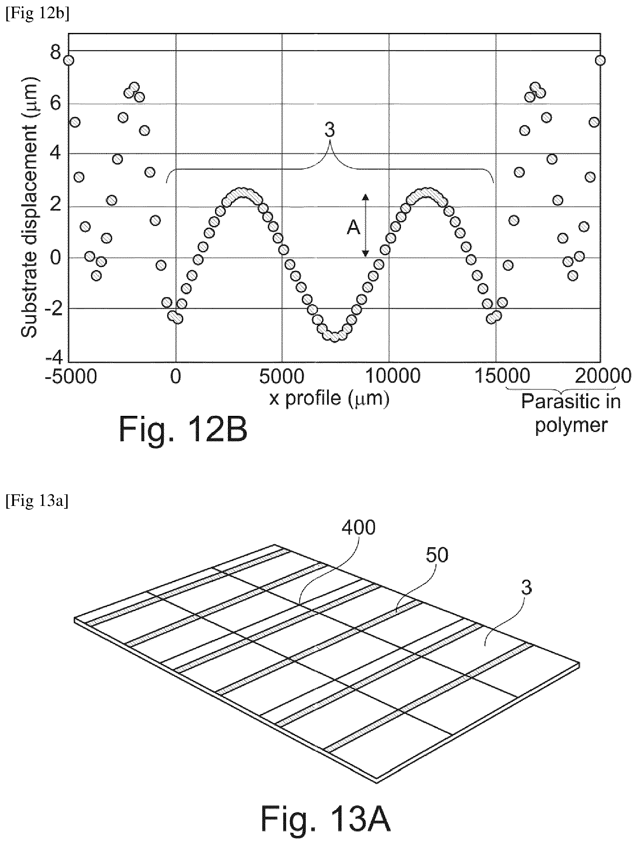

Comme illustré à la figure 12b, l'amplitude A de déformation correspondante des éléments tactiles 3 peut notamment atteindre +/- 2microns lorsque les actionneurs 5 correspondants sont soumis à une tension alternative de + /- 30 volts, ce qui permet d'obtenir un effet haptique marqué.

Un rapport des modules de Young d'environ 65 GPa /7.5 GPa, soit de l'ordre de 8, ne permet donc pas de produire les effets haptiques souhaités dans les conditions simulées. A l'inverse, un rapport de l'ordre de 86 (correspondant à 65 GPa / 0.75 GPa) peut produire les effets souhaités.

Bien entendu, d'autres épaisseurs $h_P$ et $h_E$ sont envisageables. Par exemple, pour un matériau polymère de type PEN, PI ou PC, une épaisseur comprise entre 100 microns et quelques cm, de préférence quelques mm, permet que le support assure la tenue mécanique tout en restant flexible.

L'épaisseur $h_P$ est de préférence suffisamment faible, notamment par rapport à $h_E$, pour ne pas perturber le comportement électromécanique des éléments tactiles 3. Elle est par exemple comprise entre quelques dizaines de nm à quelques centaines de microns, de préférence entre 25 et 90 microns.

Le support 4 peut être multicouche ou monocouche, comme décrit plus haut. Dans le cas d'un support multicouche, on pourra obtenir le module de Young $E_T$ et l'épaisseur totale $h_T$ du support selon les approximations suivantes, connues de l'état de l'art :

$$h_T = \sum h_i$$

$$E_T = \sum_i \frac{E_i . h_i}{h_T}$$

Avec $h_i$ et $E_i$ l'épaisseur et le module de Young de la couche i, respectivement.

Le ou des actionneurs de chaque élément tactile 3 d'une interface 1 peuvent être adressés indépendamment par le circuit de commande 6, ce qui permet de générer des effets haptiques plus ou moins localisés sur la surface tactile S.

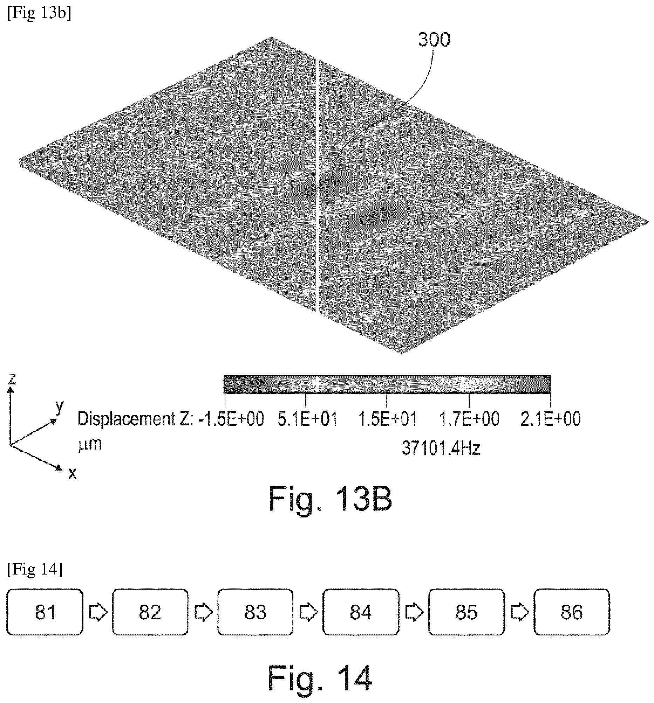

On peut par exemple obtenir une déformation perceptible de la surface tactile S uniquement en son centre, comme illustré à la figure 13b, en activant uniquement l'élément tactile central 300 d'une matrice de 3 x 3 éléments tactiles telle que représentée sur la figure 13a.

Une interface haptique 1 selon l'invention peut fonctionner selon les étapes décrites à la figure 14.

A l'étape 81, l'interface est en veille, en l'absence d'utilisateur en contact avec la surface tactile S, et les éléments tactiles 3 sont au repos.

A l'étape 82, le système de détection 6 détecte au moins un point de contact de l'utilisateur avec la surface S et le circuit de commande 6 détermine l'endroit où doit être généré(s) le ou les effets haptiques.

A l'étape 83, le circuit de commande 6 envoie les signaux de commande appropriés pour actionner au moins une partie des actionneurs 5 de façon à générer l'effet haptique désiré.

A l'étape 84, les actionneurs 5 concernés se contractent ou s'allongent par effet piézoélectrique inverse selon une amplitude d'actionnement correspondant au signal reçu, engendrant par effet unimorphe une vibration de l'élément rigide 3 avec lequel ils sont en contact.

A l'étape 85, la vibration du ou des éléments tactiles induite par les actionneurs est perçue tactilement par l'utilisateur sur la surface S.

A l'étape 86, l'utilisateur rompt le contact avec la surface tactile S et l'interface peut se remettre en veille, si l'on souhaite économiser l'énergie par exemple.

La perception tactile générée à l'étape 85 provient par exemple d'un ressenti d'une vibration des éléments tactiles, ce qui peut donner l'impression à l'utilisateur de toucher une surface vibrante ou présentant un relief.

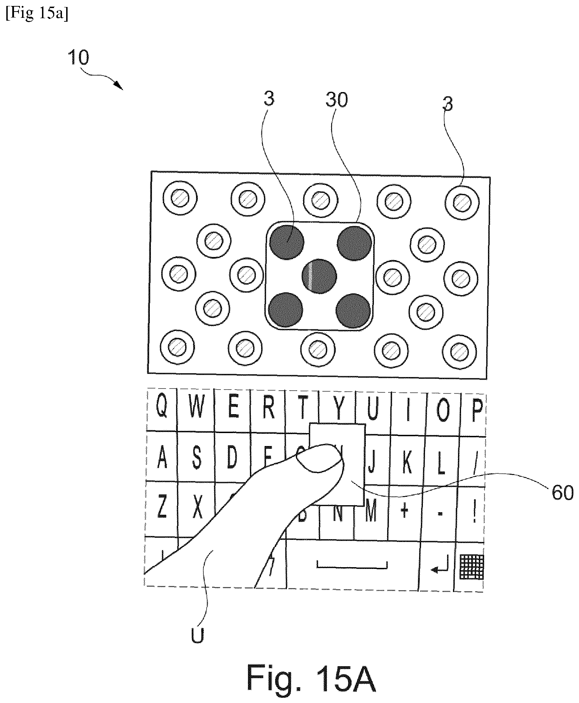

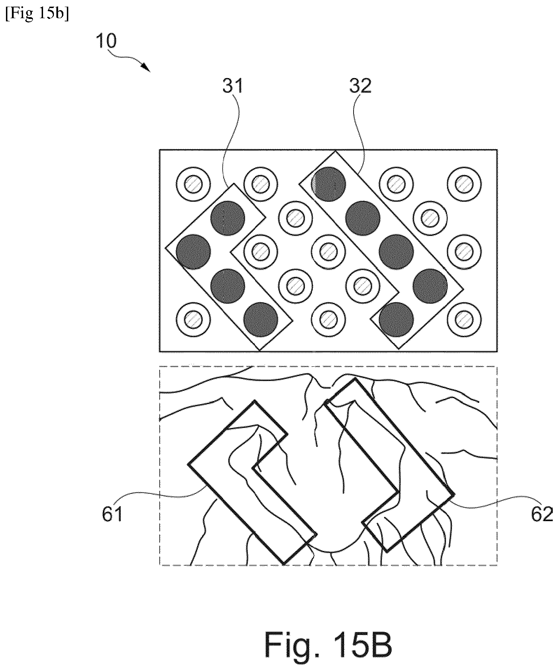

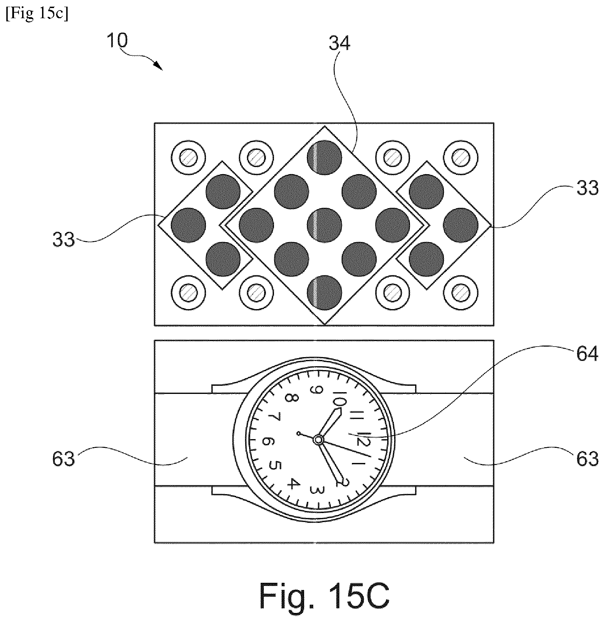

En actionnant plus ou moins d'éléments tactiles, il est possible de créer des effets relativement complexes. Certains sont décrits ci-dessous et illustrés sur les figures 15a, 15b et 15c.

On considère dans les exemples qui suivent une matrice 10 d'éléments tactiles 3 identiques, de forme circulaire et répartis de manière uniforme sur la matrice 10, en quinconce. Les éléments tactiles comportent chacun un actionneur 5 placé en leur centre.

Dans l'exemple illustré à la figure 15a, un groupe d'éléments tactiles 30 appartenant à la matrice 10 est actionné par le circuit de commande 6 pour transmettre à un utilisateur U exerçant un contact statique sur la surface une impulsion correspondant à une perception tactile 60 d'un « effet de bouton », c'est-à-dire donnant l'impression à l'utilisateur d'appuyer sur une touche de clavier.

Dans un autre exemple, illustré à la figure 15b, plusieurs groupes d'actionneurs 31 et 32 sont actionnés simultanément ou alternativement afin de générer des perceptions tactiles 61 et 62 d'un effet de pseudo-relief, c'est-à-dire donnant l'impression à l'utilisateur qui déplace son doigt au contact de l'interface d'effleurer des reliefs, par exemple la crête d'une montagne d'une carte affichée sur un écran.

Dans un autre exemple, illustré à la figure 15c, des groupes d'éléments tactiles 33 et 34 sont activés simultanément ou alternativement afin de générer des perceptions tactiles 63 et 64 d'un effet de texture, c'est-à-dire donnant l'impression à l'utilisateur qui déplace son doigt au contact de l'interface de toucher la surface lisse 64 du cadran d'une montre ou la surface plus rugueuse 63 de son bracelet.

L'utilisateur, en déplaçant son doigt, peut percevoir une variation de friction, aussi appelée « effet squeeze-film », provenant des éléments tactiles 3 qui génèrent par exemple un mode ultrasonore ou une onde évanescente lorsqu'ils sont excités par les actionneurs 5.

Dans les exemples qui viennent d'être décrits, les éléments tactiles 3 d'un même groupe peuvent être activés selon un mode de vibration identique pour tous les éléments tactiles du groupe, ou propre à chaque élément tactile, selon l'effet recherché.

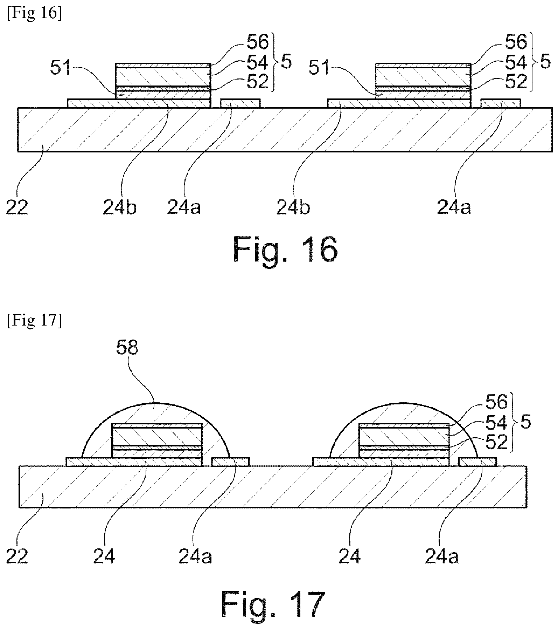

Des éléments tactiles 3 munis d'actionneurs 5 piézoélectriques peuvent être réalisés suivant les étapes illustrées aux figures 16 à 18 et décrites ci-dessous.

On dépose d'abord, par exemple par sérigraphie, une première couche 24 d'un matériau conducteur électrique, par exemple de l'or, sur la face supérieure d'une plaque rigide 22, notamment une plaque en verre,

La couche 24 est discontinue : elle comporte par exemple plusieurs sections 24a et 24b séparées qui forment les pistes d'alimentation électrique des actionneurs 5 qui viendront au contact des éléments tactiles 3.

L'épaisseur de la plaque 22 est par exemple de 500 microns. L'épaisseur de la couche 24 est par exemple de 300 nm.

On rapporte ensuite des actionneurs piézoélectriques 5 comportant par exemple une électrode inférieure 52, une couche piézoélectrique ou ferroélectrique 54 et une électrode supérieure 56. En variante, les actionneurs 5 ne comportent que la couche 54.

La couche 54 qui se situe entre les deux électrodes est par exemple de type titano-zirconate de plomb (PZT). Elle peut aussi être en nitrure d'aluminium (AlN), en oxyde de zinc (ZnO) ou tout autre matériau piézoélectrique ou ferroélectrique approprié. La couche 54 peut en outre être amincie et ajustée à l'épaisseur souhaitée.

On peut utiliser notamment une céramique piézoélectrique commerciale, ou former l'actionneur 5 par dépôt de couches minces et mise en forme sur la plaque 22, comme décrit dans le brevet FR3082997.

Comme illustré à la figure 16, l'électrode inférieure 52 des actionneurs piézoélectriques 5 peut être connectée à la piste 24 grâce à une couche de colle conductrice 51, par exemple une pâte d'argent, par exemple d'épaisseur de 40 $\mu$m environ. La déformation de la couche piézoélectrique 54 sous l'effet d'une différence de potentiel appliquée entre les électrodes est transmise à la plaque 22 par effet unimorphe dans la couche 51.

On recouvre ensuite chaque actionneur 5 avec une couche d'isolation électrique 58, par exemple faite d'un matériau polymère, afin de maintenir l'actionneur 5 et d'isoler les électrodes 52 et 56.

Seule une partie de la piste d'alimentation 24a reste découverte, comme illustré à la figure 17.

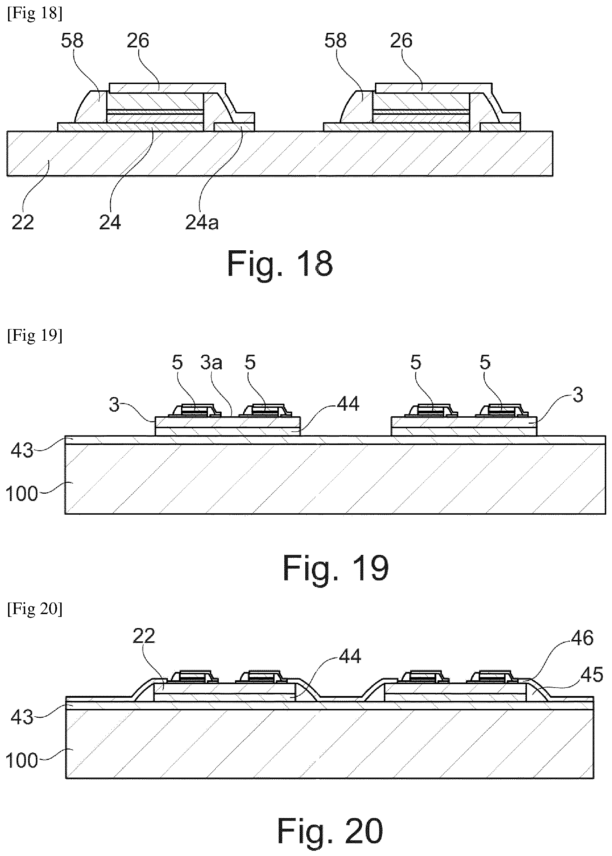

On amincit ensuite la couche isolante 58 par le haut afin de découvrir l'électrode 56, en vue de déposer, par impression à jet d'encre ou autre méthode adaptée, une couche de matériau conducteur 26 connectant l'électrode supérieure 56 avec la piste d'alimentation 24a, comme illustré à la figure 18.

En variante, on peut amincir la couche isolante 58 et la couche piézoélectrique 54 à l'épaisseur souhaitée, puis déposer une couche de matériau conducteur 26 formant à la fois l'électrode supérieure et la connexion vers la piste 24a. Le cas échéant, la couche 26 est obtenue par pochoir et pulvérisation d'or, et son épaisseur est par exemple de 300nm.

La plaque 22 peut ensuite être découpée afin d'obtenir des éléments tactiles 3 à la taille souhaitée, et munis du nombre d'actionneurs 5 prévus.

Les éléments tactiles 3 ainsi obtenus peuvent par la suite être reportés et fixés sur un substrat souple 4 pour former une structure haptique 2, suivant par exemple des étapes de réalisation décrites ci-dessous en référence aux figures 19 à 22. En particulier, une structure haptique telle que celle précédemment décrite en référence à la figure 4 peut être obtenue suivant les étapes qui suivent.

On place d'abord les éléments tactiles 3 aux endroits souhaités sur un support de fabrication 100, par exemple une plaque de silicone, sur lequel on aura au préalable formé une couche souple 42, par exemple de polymère SINR, notamment par lamination, destinée à former par exemple la couche de couverture précitée.

Les éléments tactiles 3 sont par exemple maintenus grâce à une couche 44 de colle rigide, par exemple de type époxy, par exemple d'une épaisseur de 40 microns, comme illustré à la figure 19.

On dépose par la suite une couche de matériau conducteur 46, par exemple une couche d'or d'épaisseur 300nm obtenue par masquage et pulvérisation, afin de former la connectique électrique entre chaque actionneur 5 et le circuit de commande 6, tel qu'illustré à la figure 20.

Une couche 45 isolante, comme par exemple un cordon de polymère, peut avoir été déposée autour des éléments tactiles 3 au préalable.

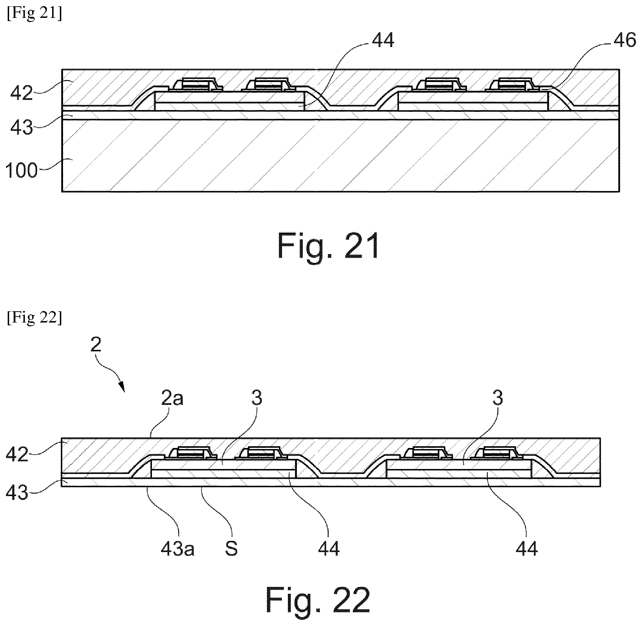

On recouvre ensuite continûment, par exemple par laminage ou collage, l'ensemble des éléments tactiles 3 et de leurs actionneurs 5 par une couche 42, notamment un film de polymère mou, afin de former des ponts souples entre les éléments tactiles 3, comme illustré à la figure 21. La couche 42 est destinée à former la couche de réception précitée.

En variante, on peut enrober les éléments tactiles 3 par un polymère mou.

On retire enfin le support de fabrication par pelage afin d'exposer la couche de couverture 43, la surface exposée définissant la surface tactile S de l'interface haptique flexible. La surface tactile peut aussi, en variante, être définie par la surface supérieure 2a de la structure haptique.

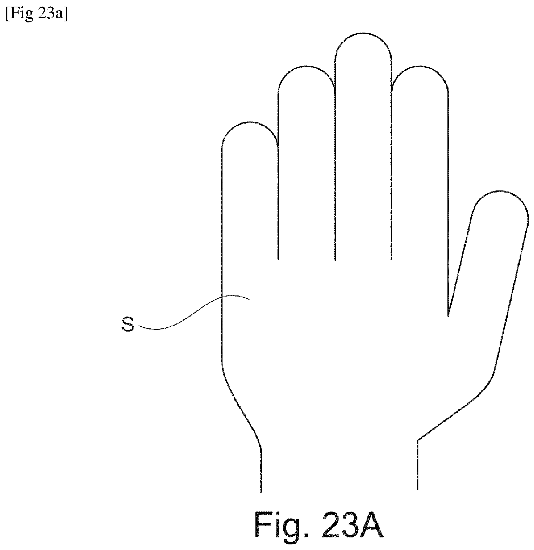

L'interface 1 selon l'invention peut être intégrée à un article vestimentaire, par exemple un gant, comme illustré à la figure 23a.

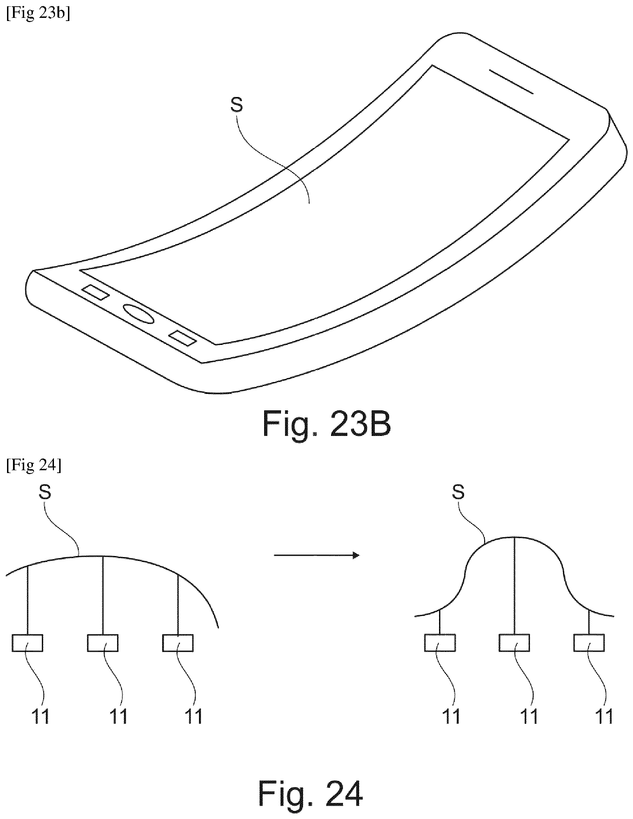

Elle peut en variante être intégrée à un appareil mobile, par exemple un téléphone flexible, comme illustré à la figure 23b.

La structure haptique 2 peut aussi, dans d'autres exemples, changer de forme selon l'effet haptique recherché, l'interface 1 pouvant compte-tenu de sa souplesse être un objet tangible reconfigurable, comme illustré à la figure 24. Sur cette figure, on voit que l'interface peut être couplée mécaniquement à un ou plusieurs actuateurs 11 qui permettent de la déformer pour lui donner une forme prédéfinie, correspondant à celle de l'objet que l'on cherche à simuler tactilement.

**Revendications**

**1.** Interface haptique flexible (1), comportant :

- Une structure haptique (2) définissant une surface tactile flexible (S) susceptible d'être contactée par un utilisateur, la structure haptique comportant :

  o Une pluralité d'éléments tactiles individuels rigides (3) portés par un support souple (4),

  o au contact de chaque élément tactile rigide (3), au moins un actionneur (5) agencé pour transmettre une excitation mécanique à l'élément tactile rigide (3) conduisant à un effet perceptible tactilement par l'utilisateur.

**2.** Interface haptique flexible selon la revendication 1, comportant un circuit de commande (6) configuré pour moduler les signaux envoyés aux actionneurs afin d'induire mécaniquement une vibration des éléments tactiles rigides (3) et générer une sensation haptique sur la surface tactile flexible (S).

**3.** Interface haptique flexible selon l'une quelconque des revendications précédentes, au moins certains des éléments tactiles rigides (3), mieux tous les éléments tactiles rigides (3), ayant une épaisseur sensiblement constante, de préférence comprise entre 50 microns et 5 mm, mieux entre 200 et 700 microns.

**4.** Interface haptique flexible selon l'une quelconque des revendications précédentes, le support (4) étant formé d'un matériau polymérique.

**5.** Interface haptique flexible selon l'une quelconque des revendications précédentes, au moins une partie des éléments tactiles rigides (3) présentant une surface extérieure (3a) débouchant sur la surface tactile flexible (S).

**6.** Interface haptique flexible selon l'une quelconque des revendications précédentes, le support (4) comportant une couche porteuse (41) et une couche (40) de compensation de l'épaisseur des éléments tactiles rigides (3), les éléments tactiles rigides (3) étant tous situés d'un même côté de la couche porteuse (41), la couche de compensation (40) comportant des portions flexibles (400) s'étendant entre les éléments tactiles rigides (3), la couche de compensation (40) étant d'épaisseur ($h_E$) sensiblement constante, de préférence comprise entre 100 microns et 5 cm, de préférence entre $500\mu m$ et 5mm, notamment 1mm, les éléments tactiles rigides (3) présentant de préférence une surface extérieure (3a) venant à affleurement de la surface extérieure (40a) de la couche de compensation (40), la surface extérieure des éléments tactiles rigides (3) et celle de la couche de compensation définissant la surface tactile flexible (S).

**7.** Interface haptique flexible selon l'une quelconque des revendications précédentes, le support (4) formant des logements (420) dans lesquels s'étendent au moins partiellement les éléments tactiles rigides (3), ces derniers étant recouverts continûment par une feuille souple (43) définissant la surface tactile flexible (S).

8. Interface haptique flexible selon l'une quelconque des revendications précédentes, l'espacement (d) entre deux éléments tactiles rigides (3) adjacents étant compris entre 10 microns et 5 mm, mieux entre 1 et 2mm.

9. Interface haptique flexible selon l'une quelconque des revendications précédentes, au moins une partie des éléments tactiles rigides (3) étant agencés en lignes et/ou en colonnes, notamment sur un même plan quand l'interface haptique flexible est à plat, de préférence selon un réseau régulier.

10. Interface haptique flexible selon l'une quelconque des revendications précédentes, chaque élément tactile rigide (3) étant muni de plusieurs actionneurs (5) s'étendant sur au moins une face (3b) de 1 élément tactile rigide (3) les actionneurs (5) étant de préférence disposés de part et d'autre d'un plan médian de l'élément tactile rigide (3), de préférence au niveau de nœuds ou de ventres de vibration.

11. Interface haptique flexible selon l'une quelconque des revendications précédentes, comportant un système de détection (7) d'un contact de l'utilisateur sur la surface tactile flexible (S), notamment une structure de détection capacitive intégrée à la structure haptique.

12. Interface haptique flexible selon l'une quelconque des revendications précédentes, comportant un système permettant de superposer au moins partiellement à la surface tactile flexible (S) une image, notamment un écran, de préférence un écran intégrant la structure haptique.

13. Interface haptique flexible selon l'une quelconque des revendications précédentes, comportant au moins un actuateur (11) permettant de conformer sélectivement l'interface selon au moins deux formes distinctes.

14. Procédé pour générer au moins une perception tactile capable d'être ressentie par un utilisateur en contact avec une interface haptique flexible définie dans l'une quelconque des revendications 1 à 13, comportant les étapes consistant à :

   - détecter la position du contact de l'utilisateur sur la surface tactile flexible (S) de l'interface grâce à un système de détection,
   - moduler, grâce à un circuit de commande (6), les signaux envoyés aux actionneurs (5) en fonction de la position détectée afin d'induire mécaniquement une vibration des éléments tactiles rigides (3) et générer un effet perceptible tactilement par l'utilisateur sur la surface tactile flexible (S),
   - de préférence, la vibration des éléments tactiles rigides (3) générant une variation de friction perceptible tactilement par un utilisateur déplaçant son doigt sur la surface tactile flexible (S) ou la vibration des éléments tactiles rigides (3) générant une impulsion perceptible tactilement par un utilisateur exerçant un contact statique sur la surface tactile flexible (S).

15. Procédé de fabrication d'un élément tactile individuel rigide (3) muni d'au moins un actionneur piézoélectrique (5) d'une interface tactile flexible définie dans l'une quelconque des revendications 1 à 13, comportant les étapes consistant à :

   - Déposer, de préférence par sérigraphie, au moins une première couche (24) d'un matériau conducteur sur la face supérieure d'un support rigide (22), de préférence un support en verre,
   - fixer des actionneurs piézoélectriques (5) sur la première couche (24) ainsi formée de façon à établir une première connexion électrique avec les actionneurs,
   - déposer une couche d'un isolant (58) sur les couches précédemment déposées,
   - amincir la couche isolante (58) afin d'exposer la face supérieure de chaque actionneur piézoélectrique (5),
   - déposer une couche d'un matériau conducteur (59) sur les actionneurs piézoélectriques ainsi exposés, de façon à établir une deuxième connexion électrique avec les actionneurs piézoélectriques (5),
   - découper le support de manière à obtenir des éléments tactiles rigides (3) munis d'un ou plusieurs actionneurs piézoélectriques, ou de fabrication d'une interface tactile flexible définie dans la revendication 2 et l'une quelconque des revendications 3 à 13, comportant les étapes consistant à :
   - Déposer une première couche (43) en matériau souple, de préférence en polymère, sur un support de fabrication (100),
   - fixer des éléments tactiles rigides (3) munis d'un ou plusieurs actionneurs (5) sur la couche ainsi déposée, les actionneurs étant disposés sur la face extérieure (3a) des éléments,
   - connecter électriquement chaque actionneur (5) au circuit de commande (6), de préférence par masquage et pulvérisation d'un matériau conducteur (46),
   - recouvrir les éléments et actionneurs par un matériau souple (42), de préférence un film polymère, et,

- séparer, notamment par pelage, l'ensemble ainsi réalisé du support de fabrication (100) de manière exposer la face inférieure de la première couche.

**Patentansprüche**

1. Flexible haptische Schnittstelle (1), umfassend:

   - Eine haptische Struktur (2), die eine flexible taktile Fläche (S) definiert, die geeignet ist, von einem Benutzer kontaktiert zu werden, wobei die haptische Struktur umfasst:

     o Eine Mehrzahl von starren einzelnen taktilen Elementen (3), die von einem biegsamen Träger (4) getragen werden,
     o in Kontakt mit jedem starren taktilen Element (3), mindestens einen Aktor (5), der dazu ausgebildet ist, eine mechanische Anregung an das starre taktile Element (3) zu übertragen, was zu einem von dem Benutzer taktil wahrnehmbaren Effekt führt.

2. Flexible haptische Schnittstelle nach Anspruch 1, umfassend eine Steuerschaltung (6), die dazu ausgestaltet ist, die an die Aktoren gesendeten Signale zu modulieren, um mechanisch eine Vibration der starren taktilen Elemente (3) zu bewirken und eine haptische Empfindung auf der flexiblen taktilen Fläche (S) zu erzeugen.

3. Flexible haptische Schnittstelle nach einem der vorhergehenden Ansprüche, wobei mindestens einige der starren taktilen Elemente (3), besser alle starren taktilen Elemente (3), eine im Wesentlichen konstante Dicke von bevorzugt zwischen 50 Mikrometern und 5 mm, besser zwischen 200 und 700 Mikrometern, besitzen.

4. Flexible haptische Schnittstelle nach einem der vorhergehenden Ansprüche, wobei der Träger (4) aus einem Polymermaterial gebildet ist.

5. Flexible haptische Schnittstelle nach einem der vorhergehenden Ansprüche, wobei mindestens ein Teil der starren taktilen Elemente (3) eine Außenfläche (3a) aufweist, die auf der flexiblen taktilen Fläche (S) mündet.

6. Flexible haptische Schnittstelle nach einem der vorhergehenden Ansprüche, wobei der Träger (4) eine Trägerschicht (41) und eine Ausgleichsschicht (40) zum Ausgleichen der Dicke der starren taktilen Elemente (3) umfasst, wobei die starren taktilen Elemente (3) alle auf einer selben Seite der Trägerschicht (41) gelegen sind, wobei die Ausgleichsschicht (40) flexible Abschnitte (400) umfasst, die sich zwischen den starren taktilen Elementen (3) erstrecken, wobei die Ausgleichsschicht (40) eine im Wesentlichen konstante Dicke ($h_E$) von bevorzugt zwischen 100 Mikrometern und 5 cm, bevorzugt zwischen 500 $\mu$m und 5 mm, insbesondere 1 mm, hat, wobei die starren taktilen Elemente (3) bevorzugt eine Außenfläche (3a) aufweisen, die bündig mit der Außenfläche (40a) der Ausgleichsschicht (40) ist, wobei die Außenfläche der starren taktilen Elemente (3) und die der Ausgleichsschicht die flexible taktile Fläche (S) definieren.

7. Flexible haptische Schnittstelle nach einem der vorhergehenden Ansprüche, wobei der Träger (4) Aufnahmen (420) bildet, in denen sich mindestens teilweise die starren taktilen Elemente (3) erstrecken, wobei Letztere durchgehend mit einer biegsamen Folie (43) bedeckt sind, die die flexible taktilen Fläche (S) definiert.

8. Flexible haptische Schnittstelle nach einem der vorhergehenden Ansprüche, wobei der Abstand (d) zwischen zwei benachbarten starren taktilen Elementen (3) zwischen 10 Mikrometern und 5 mm, besser zwischen 1 und 2 mm, beträgt.

9. Flexible haptische Schnittstelle nach einem der vorhergehenden Ansprüche, wobei mindestens ein Teil der starren taktilen Elemente (3) zeilenweise und/oder spaltenweise angeordnet ist, insbesondere auf einer selben Ebene, wenn die flexible haptische Schnittstelle flach liegt, bevorzugt gemäß einem regelmäßigen Raster.

10. Flexible haptische Schnittstelle nach einem der vorhergehenden Ansprüche, wobei jedes starre taktile Element (3) mit mehreren Aktoren (5) versehen ist, die sich auf mindestens einer Seite (3b) des starren taktilen Elements (3) erstrecken, wobei die Aktoren (5) bevorzugt beidseits einer selben Mittelebene des starren taktilen Elements (3), bevorzugt an Vibrationsknoten oder - bäuchen, angeordnet sind.

11. Flexible haptische Schnittstelle nach einem der vorhergehenden Ansprüche, umfassend ein Detektionssystem (7) zur Detektion eines Kontakts des Benutzers auf der flexiblen taktilen Fläche (S), insbesondere eine in die haptische Struktur integrierte kapazitive Detektionsstruktur.

12. Flexible haptische Schnittstelle nach einem der vorhergehenden Ansprüche, umfassend ein System, das es ermöglicht, der flexiblen taktilen Fläche (S) mindestens teilweise ein Bild zu überlagern, insbesondere einen Bildschirm, bevorzugt einen Bildschirm, der die haptische Schnittstelle beinhaltet.

**13.** Flexible haptische Schnittstelle nach einem der vorhergehenden Ansprüche, umfassend mindestens einen Aktuator (11), der es ermöglicht, die Schnittstelle selektiv gemäß mindestens zwei verschiedenen Formen zu formen.

**14.** Verfahren zum Erzeugen mindestens einer taktilen Wahrnehmung, die von einem Benutzer beim Kontakt mit einer in einem der Ansprüche 1 bis 13 definierten flexiblen haptischen Schnittstelle verspürt werden kann, umfassend die in Folgendem bestehenden Schritte:

- Detektieren der Position des Kontakts des Benutzers auf der flexiblen taktilen Fläche (S) der Schnittstelle mithilfe eines Detektionssystems,
- Modulieren, mithilfe einer Steuerschaltung (6), der an die Aktoren (5) gesendeten Signale in Abhängigkeit von der detektierten Position, um mechanisch eine Vibration der starren taktilen Elemente (3) zu bewirken und einen von dem Benutzer auf der flexiblen taktilen Fläche (S) taktil wahrnehmbaren Effekt zu erzeugen,
- wobei die Vibration der starren taktilen Elemente (3) bevorzugt eine Reibungsänderung erzeugt, die von einem Benutzer, der seinen Finger auf der flexiblen taktilen Fläche (S) bewegt, taktil wahrnehmbar ist, oder wobei die Vibration der starren taktilen Elemente (3) einen Impuls erzeugt, der von einem Benutzer, der einen statischen Kontakt auf die flexible taktile Fläche (S) ausübt, taktil wahrnehmbar ist.

**15.** Verfahren zur Herstellung eines starren einzelnen taktilen Elements (3), das mit mindestens einem piezoelektrischen Aktor (5) einer in einem der Ansprüche 1 bis 13 definierten flexiblen taktilen Schnittstelle versehen ist, umfassend die in Folgendem bestehenden Schritte:

- Aufbringen, bevorzugt durch Siebdruck, mindestens einer ersten Schicht (24) eines leitenden Materials auf die Oberseite eines starren Trägers (22), bevorzugt eines Trägers aus Glas,
- Fixieren von piezoelektrischen Aktoren (5) auf der so gebildeten ersten Schicht (24), so dass eine erste elektrische Verbindung zu den Aktoren aufgebaut wird,
- Aufbringen einer Schicht eines Isolierstoffs (58) auf die zuvor aufgebrachten Schichten,
- Verdünnen der isolierenden Schicht (58), um die Oberseite jedes piezoelektrischen Aktors (5) freizulegen,
- Aufbringen einer Schicht eines leitenden Materials (59) auf die so freigelegten piezoelektrischen Aktoren, so dass eine zweite elektrische Verbindung zu den piezoelektrischen Aktoren (5) aufgebaut wird,
- Zerschneiden des Trägers, so dass starre taktile Elemente (3) erhalten werden, die mit einem oder mehreren piezoelektrischen Aktoren versehen sind,

oder zur Herstellung einer in Anspruch 2 und einem der Ansprüche 3 bis 13 definierten flexiblen taktilen Schnittstelle, umfassend die in Folgendem bestehenden Schritte:

- Aufbringen einer ersten Schicht (43) aus biegsamem Material, bevorzugt aus Polymer, auf einen Herstellungsträger (100),
- Fixieren von starren taktilen Elementen (3), die mit einem oder mehreren Aktoren (5) versehen sind, auf der so aufgebrachten Schicht, wobei die Aktoren auf der Außenseite (3a) der Elemente angeordnet sind,
- elektrisches Verbinden jedes Aktors (5) mit der Steuerschaltung (6), bevorzugt durch Maskieren und Aufsprühen eines leitenden Materials (46),
- Bedecken der Elemente und Aktoren mit einem biegsamen Material (42), bevorzugt einem Polymerfilm, und,
- Trennen, insbesondere durch Abziehen, der so ausgeführten Anordnung von dem Herstellungsträger (100), so dass die Unterseite der ersten Schicht freigelegt wird.

**Claims**

**1.** Flexible haptic interface (1), comprising:

- a haptic structure (2) defining a flexible touch surface (S) capable of being touched by a user, the haptic structure comprising:

  ◦ a plurality of rigid individual touch elements (3) borne by a flexible carrier (4),
  ◦ in contact with each rigid touch element (3), at least one actuator (5) designed to transmit a mechanical excitation to the rigid touch element (3) resulting in an effect that is perceptible by touch by the user.

**2.** Flexible haptic interface according to Claim 1, comprising a control circuit (6) configured to modulate the signals sent to the actuators in order to mechanically induce a vibration of the rigid touch elements (3) and to generate a haptic sensation on the flexible touch surface (S).

**3.** Flexible haptic interface according to any one of the preceding claims, at least some of the rigid touch elements (3), better still all of the rigid touch elements (3), having a substantially constant thickness, preferably of between 50 microns and 5 mm, better still of between 200 and 700 microns.

4. Flexible haptic interface according to any one of the preceding claims, the carrier (4) being formed of a polymer material.

5. Flexible haptic interface according to any one of the preceding claims, at least some of the rigid touch elements (3) having an outer surface (3a) that opens out onto the flexible touch surface (S).

6. Flexible haptic interface according to any one of the preceding claims, the carrier (4) comprising a carrier layer (41) and a compensation layer (40) for compensating for the thickness of the rigid touch elements (3), the rigid touch elements (3) all being located on the same side of the carrier layer (41), the compensation layer (40) comprising flexible portions (400) extending between the rigid touch elements (3), the compensation layer (40) having a substantially constant thickness ($h_E$), preferably of between 100 microns and 5 cm, preferably of between 500 $\mu$m and 5 mm, in particular of 1 mm, the rigid touch elements (3) preferably having an outer surface (3a) that ends up being flush with the outer surface (40a) of the compensation layer (40), the outer surface of the rigid touch elements (3) and that of the compensation layer defining the flexible touch surface (S).

7. Flexible haptic interface according to any one of the preceding claims, the carrier (4) forming housings (420) in which the rigid touch elements (3) at least partially extend, the latter being continuously covered by a flexible sheet (43) defining the flexible touch surface (S).

8. Flexible haptic interface according to any one of the preceding claims, the spacing (d) between two adjacent rigid touch elements (3) being between 10 microns and 5 mm, better still between 1 and 2 mm.

9. Flexible haptic interface according to any one of the preceding claims, at least some of the rigid touch elements (3) being arranged in rows and/or in columns, in particular on the same plane when the flexible haptic interface is flat, preferably in a regular array.

10. Flexible haptic interface according to any one of the preceding claims, each rigid touch element (3) being provided with a plurality of actuators (5) extending over at least one face (3b) of the rigid touch element (3), the actuators (5) preferably being disposed on either side of a midplane of the rigid touch element (3), preferably at vibration nodes or antinodes.

11. Flexible haptic interface according to any one of the preceding claims, comprising a detection system (7) for detecting a touch of the user on the flexible touch surface (S), in particular a capacitive detection structure integrated into the haptic structure.

12. Flexible haptic interface according to any one of the preceding claims, comprising a system allowing an image, in particular a screen, preferably a screen into which the haptic structure is integrated, to be at least partially superposed on the flexible touch surface (S).

13. Flexible haptic interface according to any one of the preceding claims, comprising at least one actuator (11) allowing the interface to be selectively shaped into at least two distinct shapes.

14. Method for generating at least one tactile stimulus capable of being felt by a user touching a flexible haptic interface such as defined in any one of Claims 1 to 13, comprising the steps of:

  - detecting the position of the touch of the user on the flexible touch surface (S) of the interface by virtue of a detection system,
  - modulating, by virtue of a control circuit (6), the signals sent to the actuators (5) on the basis of the detected position in order to mechanically induce a vibration of the rigid touch elements (3) and to generate an effect that is perceptible by touch by the user on the flexible touch surface (S),
  - preferably, the vibration of the rigid touch elements (3) generating a variation in friction that is perceptible by touch by a user moving their finger over the flexible touch surface (S) or the vibration of the rigid touch elements (3) generating a pulse that is perceptible by touch by a user exerting static contact on the flexible touch surface (S).

15. Method for manufacturing a rigid individual touch element (3) provided with at least one piezoelectric actuator (5) of a flexible touch interface such as defined in any one of Claims 1 to 13, comprising the steps of:

  - depositing, preferably by screen printing, at least a first layer (24) of a conductive material on the upper face of a rigid carrier (22), preferably a carrier made of glass,
  - fastening piezoelectric actuators (5) to the first layer (24) thus formed so as to establish a first electrical connection with the actuators,
  - depositing a layer of an insulator (58) on the layers deposited beforehand,
  - thinning the insulating layer (58) in order to expose the upper face of each piezoelectric actuator (5),

- depositing a layer of a conductive material (59) on the piezoelectric actuators thus exposed, so as to establish a second electrical connection with the piezoelectric actuators (5),

- cutting the carrier so as to obtain rigid touch elements (3) provided with one or more piezoelectric actuators, or for manufacturing a flexible touch interface such as defined in Claim 2 and any one of Claims 3 to 13, comprising the steps of:

- depositing a first layer (43) made of flexible material, preferably made of polymer, on a manufacturing carrier (100),

- fastening rigid touch elements (3) provided with one or more actuators (5) to the layer thus deposited, the actuators being disposed on the outer face (3a) of the elements,

- electrically connecting each actuator (5) to the control circuit (6), preferably by masking and sputtering of a conductive material (46),

- covering the elements and actuators with a flexible material (42), preferably a polymer film, and

- separating, in particular by peeling, the assembly thus produced from the manufacturing carrier (100) so as to expose the lower face of the first layer.

[Fig 1]

Fig. 1

[Fig 2]

Fig. 2

[Fig 3]

Fig. 3

[Fig 4]

Fig. 4

[Fig 5]

Fig. 5

[Fig 6]

Fig. 6

[Fig 7]

Displacement Z: -3.5E+01 -2.1E+01 7.6E+00 6.2E+00 2.0E+01
µm
66101.7Hz

Fig. 7

Fig. 8

EP 4 047 453 B1

[Fig 9]

Fig. 9

[Fig 10]

Fig. 10

[Fig 11]

Fig. 11

[Fig 12a]

Displacement Mag: 5.5E+00 2.1E+01 6.3E+00 3.4E+00 1.3E+01 μm

Fig. 12A

66143.2Hz

[Fig 12b]

Fig. 12B

[Fig 13a]

Fig. 13A

[Fig 13b]

300

Displacement Z: -1.5E+00  5.1E+01  1.5E+01  1.7E+00  2.1E+00
µm                                          37101.4Hz

## Fig. 13B

[Fig 14]

| 81 | ⇨ | 82 | ⇨ | 83 | ⇨ | 84 | ⇨ | 85 | ⇨ | 86 |

## Fig. 14

[Fig 15a]

10

3     30      3

| Q | W | E | R | T | Y | U | I | O | P |
| A | S | D | F | G | H | J | K | L | / |
| Z | X | | | N | M | + | - | ! |

60

U

Fig. 15A

[Fig 15b]

Fig. 15B

[Fig 15c]

Fig. 15C

[Fig 16]

Fig. 16

[Fig 17]

Fig. 17

[Fig 18]

Fig. 18

[Fig 19]

Fig. 19

[Fig 20]

Fig. 20

[Fig 21]

Fig. 21

[Fig 22]

Fig. 22

[Fig 23a]

Fig. 23A

[Fig 23b]

Fig. 23B

[Fig 24]

Fig. 24

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10240688 B2

- FR 3082997

**Littérature non-brevet citée dans la description**

- **YU et al.** Skin-integrated wireless haptic interfaces for virtual and augmented reality. *Nature*, 2019
- **LOCHTEFELD**. Towards real organic user interfaces - using non-Newtonian fluids for self-actuated displays. *CHI13 workshop*, 2013
- **PONCET**. Static and dynamic studies of electro-active polymer actuators and integration in a demonstrator. *Actuators Journal*, 2017

- **CASSET, F et al.** Low voltage actuated plate for haptic applications with PZT thin-film. *Proceedings of Transducers*, 2013
- **PONCET**. Design and realization of electroactive polymer actuators for transparent and flexible haptic feedback interfaces. *EuroSime*, 2016